# FASCICULE DE BREVET EUROPEEN

(11) **EP 2 985 560 B1**
(45) Date de publication et mention de la délivrance du brevet: **27.05.2020**
(21) Numéro de dépôt: 15178154.9
(22) Date de dépôt: 23.07.2015
(51) Int. Cl.: F28F 9/02, F16L 39/00, F16L 41/02, H01M 10/60

(54) **DISPOSITIF DE CONNEXION ET DISTRIBUTION POUR CIRCUIT DE GESTION THERMIQUE DE BATTERIE**
ANSCHLUSS- UND VERTEILUNGSVORRICHTUNG FÜR THERMISCHEN STEUERSCHALTKREIS VON BATTERIEN
CONNECTION AND DISTRIBUTION DEVICE FOR THERMAL MANAGEMENT CIRCUIT OF A BATTERY

(30) Priorité: 04.08.2014 FR 1457586
(43) Date de publication de la demande: 17.02.2016
(73) Titulaire: VALEO SYSTEMES THERMIQUES, 78320 Le Mesnil Saint-Denis (FR)
(72) Inventeur: POURMARIN, Alain, 72210 La Suze-sur-Sarthe (FR); PREVOST, Jean Christophe, 72270 Ligron (FR); TRINDADE, José, 78125 Gazeran (FR); BIREAUD, Fabien, 78320 Le Mesnil Saint-Denis (FR); CHEVALLIER, Christophe, 72650 La Chapelle-Saint-Aubin (FR)
(74) Mandataire: Tran, Chi-Hai

(56) Documents cités:
- EP-A1- 0 738 852
- EP-A1- 2 602 141
- GB-A- 2 463 896

## Description

La présente invention concerne une installation de gestion thermique de pack batterie placée au sein d'un caisson de protection comportant un dispositif de connexion et distribution. Un dispositif de connexion pour une installation thermique est connu du document EP 2 602 141.

La régulation thermique des batteries, notamment dans le domaine automobile et encore plus particulièrement des véhicules électriques et hybrides, est un point important car si les batteries sont soumises à des températures trop froides, leur autonomie peut décroître fortement et si elles sont soumises à des températures trop importantes, il y a un risque d'emballement thermique pouvant aller jusqu'à la destruction de la batterie.

Afin de réguler la température des batteries, il est connu d'ajouter un dispositif de régulation de température du module batterie. Ces dispositifs utilisent généralement des fluides caloporteurs circulant, par exemple au moyen d'une pompe, dans un circuit de conduit, ledit circuit de conduit passant notamment sous ou à l'intérieur d'une plaque d'échange thermique en contact direct avec les batteries.

Les fluides caloporteurs peuvent ainsi absorber de la chaleur émise par la ou les batteries afin de les refroidir et évacuer cette chaleur au niveau d'un ou plusieurs échangeurs thermiques comme par exemple un radiateur ou un réfrigérant. Les fluides caloporteurs peuvent également, si besoin est, apporter de la chaleur pour réchauffer lesdites batteries, par exemple s'ils sont reliés à une résistance électrique ou à un chauffage par Coefficient Positif de Température (CTP).

Les fluides caloporteurs généralement utilisés sont l'air ambiant ou des liquides comme par exemple l'eau. Les liquides étant meilleurs conducteurs de chaleur que les gaz, c'est une solution qui est privilégiée car plus efficace.

Néanmoins il existe une grande diversité de packs batterie ou d'ensembles de batteries avec en leur sein des architectures différentes qui nécessitent des configurations de branchements et de refroidissement particulières selon les besoins. Ainsi, il est difficile de standardiser les branchements entre les packs batterie ou ensembles de batteries avec le reste de l'installation de gestion thermique des batteries.

Un des buts de la présente invention est donc de proposer un dispositif de connexion et distribution pour circuit de gestion thermique d'un pack batterie ou d'un ensemble de batteries amélioré et modulaire.

La présente invention concerne une installation de gestion thermique de pack batterie avec les caractéristiques de la revendication 1.

Une telle conformation du dispositif de connexion et distribution permet une meilleure adaptabilité de ce dernier aux différents types de configuration de pack batterie ou ensemble de batteries. En effet, afin de s'adapter au circuit de circulation au sein du pack batterie ou de l'ensemble de batteries il suffit lors du processus de fabrication de choisir le coupleur d'évacuation ou d'injection correspondant et de le fixer de façon étanche à la base.

Selon un aspect de l'invention, la base comporte un moyen de fixation d'une vanne d'expansion sur sa face comprenant le connecteur d'entrée et le connecteur de sortie de fluide caloporteur.

Selon un autre aspect de l'invention, la base comporte en outre un élargissement, ledit élargissement comportant un moyen de fixation dudit dispositif de connexion à une paroi du caisson de protection, ladite base étant destinée à traverser ladite paroi.

Selon un autre aspect de l'invention, l'élargissement comporte, sur sa circonférence, un logement de placement d'un joint d'étanchéité entre ledit élargissement et la paroi du caisson de protection.

Selon l'invention, le coupleur d'injection comporte, en amont de la division du canal de circulation traversant ledit coupleur d'injection en au moins deux embranchements, un rétrécissement du diamètre dudit canal de circulation.

Selon un autre aspect de l'invention, les coupleurs d'injection et d'évacuation, ainsi que la base, sont en métal et la fixation étanche desdits coupleurs d'injection et d'évacuation sur la base est réalisée par brasage.

Selon un autre aspect de l'invention, les coupleurs d'injection et d'évacuation comportent un nombre de branchements choisis en fonction de la configuration intérieure de connexions et de circulation du fluide caloporteur au sein du pack batterie ou de l'ensemble de batteries.

Selon un autre aspect de l'invention, le connecteur d'entrée et le connecteur de sortie ont une conformation de branchement différente.

Les caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique en perspective en vue de dessous d'un dispositif de connexion utilisé dans l'invention,
- la figure 2 montre une représentation schématique en perspective en vue de dessus du dispositif de connexion de la figure 1,
- la figure 3 montre une représentation schématique en coupe en vue de côté du dispositif de connexion des figures 1 et 2,
- la figure 4 montre une représentation schématique d'installation de gestion thermique au niveau de packs batteries de diverses configurations.

Les éléments identiques sur les différentes figures, portent les mêmes références.

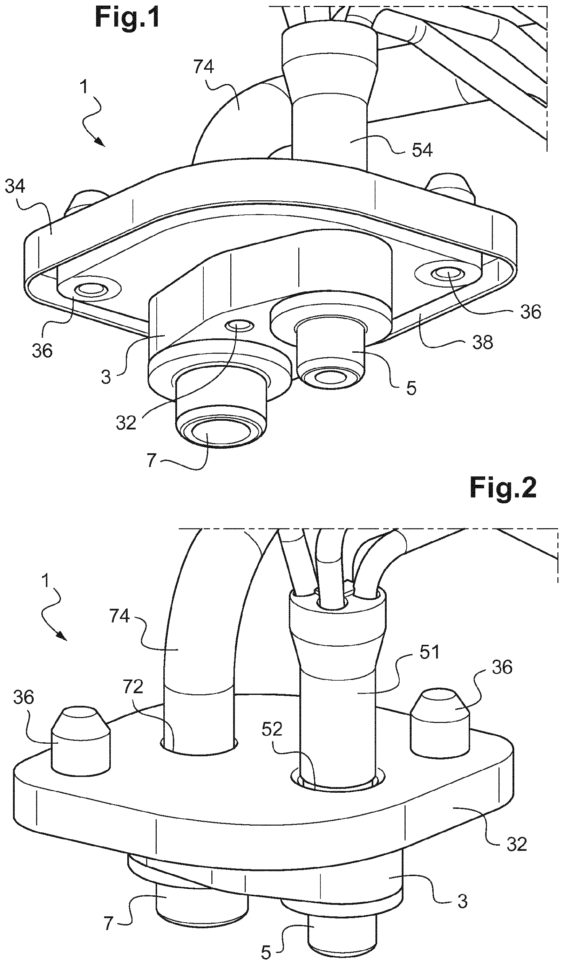

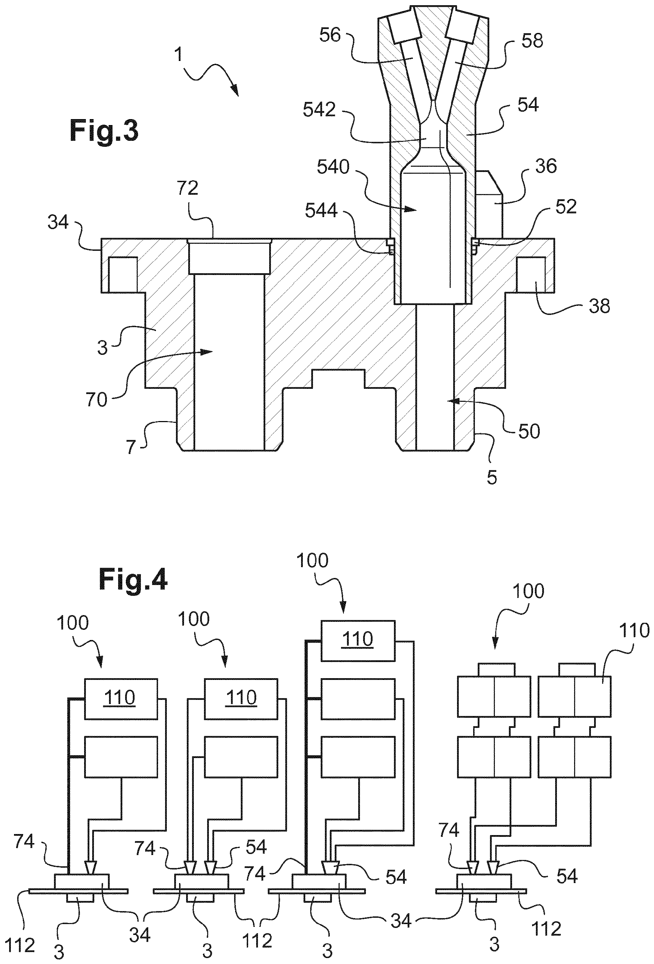

Les figures 1 à 3 montrent des représentations schématiques d'un dispositif de connexion et distribution 1 de fluide caloporteur respectivement en vue de dessous, en vue de dessus et en vue de coupe. Ce dispositif de connexion et distribution 1 est destiné à permettre le branchement entre un circuit de gestion thermique et un pack batterie 100 ou un ensemble de batteries 100 placé au sein d'un caisson de protection dans le cadre d'une installation de gestion thermique. Ledit dispositif de connexion et distribution 1 comporte notamment :
- une base 3,
- un connecteur d'entrée 5 de fluide caloporteur, c'est à dire en provenance du circuit de gestion thermique, et un connecteur de sortie 7 de fluide caloporteur, c'est-à-dire se dirigeant vers le circuit de gestion thermique. Ces connecteurs d'entrée 5 et de sortie 7 sont placés sur une face de la base et comprenant chacun un canal de circulation 50, 70 (visible sur la vue de coupe de la figure 3 de fluide caloporteur traversant ladite base 3. Ce connecteur d'entrée 5 est notamment destiné à être placé en aval d'une vanne d'expansion du circuit de gestion thermique.
- un orifice de sortie 52, 72 de chaque canal de circulation sur une face de la base 3 distincte de celle portant les connecteurs d'entrée 5 et de sortie 7, par exemple sur la face opposée ou encore sur une face latérale,
- un coupleur d'injection 54 inséré et fixé de façon étanche au sein de l'orifice de sortie 52 du canal de circulation 50 du connecteur d'entrée 5, ledit coupleur d'injection 54 étant traversé par un canal de circulation 540 comprenant au moins deux embranchements 56, 58 destinés à alimenter des échangeurs thermiques placés au contact de batteries 110, et
- un coupleur d'évacuation 74 inséré et fixé de façon étanche au sein de l'orifice de sortie 72 du canal de circulation 70 du connecteur de sortie 7, ledit coupleur d'évacuation 74 comprenant au moins un embranchement raccordé aux échangeurs thermiques placés au contact de batteries 110.

Une telle conformation du dispositif de connexion et distribution 1 permet une meilleure adaptabilité de ce dernier aux différents types de configuration de pack batterie 100 ou ensemble de batteries 100. En effet, afin de s'adapter au circuit de circulation au sein du pack batterie 100 ou de l'ensemble de batteries 100 il suffit lors du processus de fabrication de choisir le coupleur d'évacuation 74 ou d'injection 54 correspondant et de le fixer de façon étanche à la base 3.

Les coupleurs d'injection 54 et d'évacuation 74 comportent ainsi un nombre de branchements 56, 58 choisis en fonction de la configuration intérieure de connexions et de circulation du fluide caloporteur au sein du pack batterie 100 ou de l'ensemble de batteries 100 comme montré sur la figure 4.

Les coupleurs d'injection 54 et d'évacuation 74, ainsi que la base 3, peuvent être en métal et ainsi la fixation étanche desdits coupleurs d'injection 54 et d'évacuation 74 sur la base 3 peut être réalisée par brasage. Par exemple au moyen d'un anneau de brasage placé à la foi au contact des coupleurs d'injection 54 et d'évacuation 74 et de l'orifice de sortie 52, 72 comme illustré sur la figure 3.

Il est cependant tout à fait possible d'imaginer d'autre types de fixation étanche comme par exemple un vissage, une introduction en force ou même simplement un cordon de soudure.

Le coupleur d'injection 54 peut comporter, en amont de la division du canal de circulation 540 traversant ledit coupleur d'injection 54 en au moins deux embranchements 56, 58, un rétrécissement 542 du diamètre dudit canal de circulation 540. Ce rétrécissement 542 créé un effet venturi au sein du canal de circulation ce qui permet un écoulement homogène du fluide caloporteur dans les différents embranchements 56, 58.

La base 3 peut également comporter un moyen de fixation 32 de la vanne d'expansion sur sa face comprenant le connecteur d'entrée 5 et le connecteur de sortie 7 de fluide caloporteur. Ledit moyen de fixation 32 peut par exemple être un orifice taraudé comme illustré sur la figure 1.

Le connecteur d'entrée 5 et le connecteur de sortie 7 peuvent également avoir une conformation de branchement différente. Par exemple et comme illustré sur les figures 1 à 3, ces derniers peuvent être circulaires avec des diamètres différents. Cette différence entre le connecteur d'entrée 5 et le connecteur de sortie 7 joue le rôle de détrompeur et évite ainsi des branchements erronés avec le reste du circuit de gestion thermique, notamment avec la vanne d'expansion.

La base 3 peut comporter en outre un élargissement 34. Cet élargissement 34 comporte plus particulièrement un moyen de fixation 36 dudit dispositif de connexion 1 à une paroi 112 du caisson de protection du pack batterie 100 ou de l'ensemble de batteries 100. L'élargissement 34 est alors accolé à la face intérieure de la paroi 112 du caisson de protection alors que la base 3 traverse ladite paroi 112 pour permettre la connexion avec le reste du circuit de gestion thermique.

Afin d'assurer une bonne étanchéité du montage, l'élargissement 34 comporte, sur sa circonférence, un logement 38 de placement d'un joint d'étanchéité. Ledit joint vient alors se placer entre ledit élargissement 34 et la paroi 112 du caisson de protection.

Ainsi, on voit bien que du fait de sa conformation particulière, le dispositif de connexion et de distribution utilisé dans l'invention permet une adaptabilité accrue aux différents types de packs batterie ou ensembles de batteries.

## Revendications

1. Installation de gestion thermique de pack batterie (100) placée au sein d'un caisson de protection comportant un dispositif de connexion et distribution (1), le dispositif de connextion comportant :
- une base (3),
- un connecteur d'entrée (5) et un connecteur de sortie (7) de fluide caloporteur placés sur une face de la base (3) et comprenant chacun un canal de circulation (50, 70) de fluide caloporteur traversant ladite base (3),
- un orifice de sortie (52, 72) de chaque canal de circulation sur une face de la base (3) distincte de celle portant les connecteurs d'entrée (5) et de sortie (7),
- un coupleur d'injection (54) inséré et fixé de façon étanche au sein de l'orifice de sortie (52) du canal de circulation (50) du connecteur d'entrée (5), ledit coupleur d'injection (54) étant traversé par un canal de circulation (540) comprenant au moins deux embranchements (56, 58) alimentant des échangeurs thermiques placés au contact de batteries (110),
- un coupleur d'évacuation (74) inséré et fixé de façon étanche au sein de l'orifice de sortie (72) du canal de circulation (70) du connecteur de sortie (7), ledit coupleur d'évacuation (74) comprenant au moins un embranchement raccordé aux échangeurs thermiques placés au contact de batteries (110)
le coupleur d'injection (54) comportant, en amont de la division du canal de circulation (540) traversant ledit coupleur d'injection (54) en au moins deux embranchements (56, 58), un rétrécissement (542) du diamètre dudit canal de circulation (540).

2. Installation de gestion thermique de pack batterie (100) selon la revendication précédente dans laquelle la base du dispositif de connexion (1) comporte un moyen de fixation (32) d'une vanne d'expansion sur sa face comprenant le connecteur d'entrée (5) et le connecteur de sortie (7) de fluide caloporteur.

3. Installation de gestion thermique de pack batterie (100) selon l'une des revendications précédentes, dans laquelle la base du dispositif de connexion (1) comporte en outre un élargissement (34), ledit élargissement (34) comportant un moyen de fixation (36) dudit dispositif de connexion (1) à une paroi (112) du caisson de protection, ladite base (3) étant destinée à traverser ladite paroi (112).

4. Installation de gestion thermique de pack batterie (100) selon la revendication précédente dans laquelle l'élargissement (34) comporte, sur sa circonférence, un logement (38) de placement d'un joint d'étanchéité entre ledit élargissement (34) et la paroi (112) du caisson de protection.

5. Installation de gestion thermique de pack batterie (100) selon l'une des revendications précédentes dans laquelle les coupleurs d'injection (54) et d'évacuation (74), ainsi que la base (3), sont en métal et que la fixation étanche desdits coupleurs d'injection (54) et d'évacuation (74) sur la base (3) est réalisée par brasage.

6. Installation de gestion thermique de pack batterie (100) selon l'une des revendications précédentes dans laquelle les coupleurs d'injection (54) et d'évacuation (74) comportent un nombre de branchements (56, 58) choisis en fonction de la configuration intérieure de connexions et de circulation du fluide caloporteur au sein du pack batterie (100) ou de l'ensemble de batteries (100).

7. Installation de gestion thermique de pack batterie (100) selon l'une des revendications précédentes dans laquelle le connecteur d'entrée (5) et le connecteur de sortie (7) ont une conformation de branchement différente.

## Patentansprüche

1. Batteriepack-Temperaturmanagementanlage (100), die in einem Schutzgehäuse angeordnet ist und eine Anschluss- und Verteilungsvorrichtung (1) aufweist, wobei die Anschlussvorrichtung aufweist:
- eine Basis (3),
- einen Einlassanschluss (5) und einen Auslassanschluss (7) für ein Wärmeträgermedium, die auf einer Seite der Basis (3) angeordnet sind und jeweils einen Zirkulationskanal (50, 70) für ein Wärmeträgermedium umfassen, der die Basis (3) durchdringt,
- eine Auslassöffnung (52, 72) jedes Zirkulationskanals auf einer Seite der Basis (3), die verschieden von der ist, die den Einlassanschluss (5) und Auslassanschluss (7) trägt,
- einen Zulaufkoppler (54), der dicht in die Auslassöffnung (52) des Zirkulationskanals (50) des Einlassanschlusses (5) eingeführt und darin fixiert ist, wobei der Zulaufkoppler (54) von einem Zirkulationskanal (540) durchdrungen wird, der mindestens zwei Zweige (56, 58) umfasst, die Wärmetauscher versorgen, welche in Kontakt mit Batterien (110) angeordnet sind,
- einen Ablaufkoppler (74), der dicht in die Auslassöffnung (72) des Zirkulationskanals (70) des Auslassanschlusses (7) eingeführt und darin fixiert ist, wobei der Ablaufkoppler (74) mindestens einen Zweig umfasst, der mit den Wärmetauschern verbunden ist, die in Kontakt mit Batterien (110) angeordnet sind,
wobei der Zulaufkoppler (54) stromauf der Aufteilung des den Zulaufkoppler (54) durchdringenden Zirkulationskanals (540) in mindestens zwei Zweige (56, 58) eine Verengung (542) des Durchmessers des Zirkulationskanals (540) aufweist.

2. Batteriepack-Temperaturmanagementanlage (100) nach dem vorhergehenden Anspruch, bei der die Basis der Anschlussvorrichtung (1) eine Fixierungseinrichtung (32) zur Fixierung eines Expansionsventils auf seiner Seite aufweist, die den Einlassanschluss (5) und den Auslassanschluss (7) für ein Wärmeträgermedium umfasst.

3. Batteriepack-Temperaturmanagementanlage (100) nach einem der vorhergehenden Ansprüche, bei der die Basis der Anschlussvorrichtung (1) ferner eine Verbreiterung (34) aufweist, wobei die Verbreiterung (34) eine Fixierungseinrichtung (36) zur Fixierung der Anschlussvorrichtung (1) an einer Wand (112) des Schutzgehäuses aufweist, wobei die Basis (3) dazu bestimmt ist, die Wand (112) zu durchdringen.

4. Batteriepack-Temperaturmanagementanlage (100) nach dem vorhergehenden Anspruch, bei der die Verbreiterung (34) an ihrem Umfang eine Aufnahme (38) zum Einlegen einer Dichtung zwischen der Verbreiterung (34) und der Wand (112) des Schutzgehäuses aufweist.

5. Batteriepack-Temperaturmanagementanlage (100) nach einem der vorhergehenden Ansprüche, bei der die Zulaufkoppler (54) und Ablaufkoppler (74) sowie die Basis (3) aus Metall sind und die dichte Fixierung der Zulaufkoppler (54) und Ablaufkoppler (74) an der Basis (3) durch Löten ausgeführt wird.

6. Batteriepack-Temperaturmanagementanlage (100) nach einem der vorhergehenden Ansprüche, bei der die Zulaufkoppler (54) und Ablaufkoppler (74) eine Anzahl von Zweigen (56, 58) aufweisen, die in Abhängigkeit von der inneren Anschluss- und Zirkulationsausgestaltung für das Wärmeträgermedium in dem Batteriepack (100) oder der Batterieanordnung (100) gewählt wird.

7. Batteriepack-Temperaturmanagementanlage (100) nach einem der vorhergehenden Ansprüche, bei welcher der Einlassanschluss (5) und der Auslassanschluss (7) eine unterschiedliche Verzweigungsausbildung haben.

## Claims

1. Battery pack (100) thermal management installation placed in a protecting box comprising a connection and distribution device (1), the connection device including:
- a base (3),
- a heat-exchange fluid inlet connector (5) and a heat-exchange fluid outlet connector (7) placed on a face of the base (3) and each comprising a heat-exchange fluid circulation passage (50, 70) passing through said base (3),
- an outlet orifice (52, 72) of each circulation passage on a face of the base (3) separate from that carrying the inlet connector (5) and the outlet connector (7),
- an injection coupler (54) inserted in and fixed in a sealed manner to the outlet orifice (52) of the circulation passage (50) of the inlet connector (5), said injection coupler (54) having a circulation passage (540) passing through it comprising at least two branches (56, 58) feeding heat-exchangers (110) placed in battery contact,
- an evacuation coupler (74) inserted in and fixed in a sealed manner to the outlet orifice (72) of the circulation passage (70) of the outlet connector (7), said evacuation coupler (74) comprising at least one branch connected to the heat-exchangers (110) placed in battery contact,
the injection coupler (54) including a reduction (542) of the diameter of said circulation passage (540) on the upstream side of the division into at least two branches (56, 58) of the circulation passage (540) passing through said injection coupler (54).

2. Battery pack (100) thermal management installation according to the preceding claim, in which the base of the connection device (1) includes expansion valve fixing means (32) on its face comprising the heat-exchange fluid inlet connector (5) and the heat-exchange fluid outlet connector (7) .

3. Battery pack (100) thermal management installation according to either one of the preceding claims, in which the base of the connection device (1) further includes an enlargement (34), said enlargement (34) including means (36) for fixing said connection device (1) to a wall (112) of the protecting box, said base (3) being intended to pass through said wall (112).

4. Battery pack (100) thermal management installation according to the preceding claim, in which the enlargement (34) includes on its circumference a housing (38) for placement of a seal between said enlargement (34) and the wall (112) of the protecting box.

5. Battery pack (100) thermal management installation according to any one of the preceding claims, in which the injection coupler (54) and the evacuation coupler (74) and the base (3) are made of metal and said injection coupler (54) and said evacuation coupler (74) are fixed to the base (3) in a sealed manner by brazing.

6. Battery pack (100) thermal management installation according to any one of the preceding claims, in which the injection coupler (54) and the evacuation coupler (74) include a number of branches (56, 58) chosen as a function of the heat-exchange fluid connection and circulation interior configuration in the battery pack (100) or battery system (100).

7. Battery pack (100) thermal management installation according to any one of the preceding claims, in which the inlet connector (5) and the outlet connector (7) have a different branching conformation.
